# EUROPÄISCHE PATENTSCHRIFT

(11) **EP 3 852 210 B1**
(45) Veröffentlichungstag und Bekanntmachung des Hinweises auf die Patenterteilung: **08.03.2023**
(21) Anmeldenummer: 20152417.0
(22) Anmeldetag: 17.01.2020
(51) Int. Cl.: H02G 3/04, H02G 11/00

(54) **KABELFÜHRUNG UND VORRICHTUNG**
CABLE GUIDE AND DEVICE
GUIDAGE DE CÂBLE ET DISPOSITIF

(43) Veröffentlichungstag der Anmeldung: 21.07.2021
(73) Patentinhaber: Wincor Nixdorf International GmbH, 33106 Paderborn (DE)
(72) Erfinder: KIRSCHKE, Uwe, 13505 Berlin (DE); JESCHKE, Andreas, 14624 Dallgow (DE); SCHMIDT, Jörg, 04610 Meuselwitz (DE)

(56) Entgegenhaltungen:
- WO-A1-2013/141714
- DE-A1-102012 014 274
- US-B1- 8 003 887

## Beschreibung

Verschiedene Ausführungsbeispiele betreffen eine Kabelführung und eine Vorrichtung.

Im Allgemeinen werden Kabel verwendet, um technische Komponenten miteinander zu verbinden und/oder diese mit elektrischer Energie zu versorgen. In einigen Fällen kann es erforderlich sein, dass diese technischen Komponenten relativ zueinander bewegt werden können, so dass das/die Kabel dieser Relativbewegung folgen müssen.

Beinhaltet die Relativbewegung ferner eine Drehung, so kann ein Kabel, welches über den entsprechenden Drehpunkt verlegt ist, eine Lage einnehmen, welche durch äußere Einflüsse beeinflusst ist, z.B. von der Position der zwei technischen Komponenten zueinander. Wird nun dieser Drehpunkt in seinem Öffnungswinkel gedreht, wird auf das Kabel im Bereich des Drehpunktes ein Zug oder ein Druck ausgeübt. Dies führt zu Spannungen in dem Kabel und im weiteren auch zu Quetschungen durch den Zug/Druck, welche das Kabel beschädigen können.

Herkömmlicherweise wird dieser Zug/Druck gemindert, indem dem Kabel eine Möglichkeit zum Längenausgleich bereitgestellt wird. Eine Möglichkeit hierzu ist die sogenannte Kabelführung, bei welcher das Kabel nahe dem Drehpunkt in eine Wellenform gelegt wird, welche den Zug/Druck ausgleicht.

US 8 003 887 B1 beschreibt ein Verbindungsglied, das enthält: ein Kabel, das eingerichtet ist zum Übertragen von Signalen; eine erste robuste Komponente, die auf einer oberen Oberfläche des Kabels angeordnet ist; und eine zweite robuste Komponente, die auf einer unteren Oberfläche des Kabels angeordnet ist und eingerichtet ist, um an der ersten robusten Komponente gesichert zu werden.

WO 2013/141714 A1 beschreibt eine Unterstützungsvorrichtung für ein oder mehrere Kabel, wobei mindestens ein Ende jedes Kabels mit beweglicher Maschinerie verbunden ist.

DE 10 2012 014274 A1 beschreibt eine Kabelführung für zumindest ein Kabel, die aufweist: ein flexibles und/oder verformbares Stützelement, das sich im Wesentlichen über die gesamte Länge der Kabelführung erstreckt, sowie mindestens einen Halteabschnitt für ein Kabel, in den zumindest ein Kabel eingelegt und zumindest abschnittsweise entlang des Stützelements geführt werden kann.

Gemäß verschiedenen Ausführungsformen wurde anschaulich erkannt, dass herkömmliche Lösungen zum Längenausgleich kompliziert und unflexibel sind. Dies erschwert deren Einsatz insbesondere dann, wenn zwei Drehpunkte (z.B. mittels Drehgelenken bereitgestellt) mit einem Abstand voneinander vorliegen und das/die Kabel über beide Drehpunkte geführt werden sollen. Bei zwei Drehpunkten kann von jedem der Drehpunkte eine Kraft auf das Kabel ausgehen, so dass sich der mögliche Zug/Druck auf das/die Kabel vergrößert und unter Umständen ungleichmäßig wirkt. Insbesondere bei mehreren Kabeln können dabei Verschlingungen auftreten, so dass sich die Kabel untereinander blockieren.

Gemäß verschiedenen Ausführungsformen werden eine Kabelführung und eine Vorrichtung, welche diese aufweist, bereitgestellt, welche unkomplizierter, leistungsfähiger und einfach herzustellen ist. Beispielsweise wird es erleichtert, eine Vielzahl von Kabeln voneinander separiert zu halten.

Gemäß verschiedenen Ausführungsformen weist die Kabelführung auf: eine Befestigungsstruktur, mehrere nebeneinander (z.B. räumlich voneinander separiert) angeordnete Führungskanäle, welche mittels der Befestigungsstruktur miteinander gekuppelt sind und von denen jeder Führungskanal zwei oder mehrere mäanderbogenbogenförmige Kanalsegmente aufweist, wobei zwischen zwei mäanderbogenförmigen Kanalsegmenten der zwei oder mehreren mäanderbogenförmigen Kanalsegmente die Befestigungsstruktur angeordnet ist, wobei die zwei mäanderbogenbogenförmigen Kanalsegmente derart federelastisch eingerichtet sind, dass diese entgegen einer Federkraft zu der Befestigungsstruktur hin gestaucht und von der Befestigungsstruktur weg gedehnt werden können.

Anschaulich wird mittels der Kabelführung jedes der Kabel zwischen den Drehpunkten nebeneinander entlang eines Pfades (auch als Kabelpfad bezeichnet) geführt, z.B. entlang eines wellenförmigen Kabelpfads (auch als Wellenbahn bezeichnet). Die Kabelführung kann dynamisch Kabellänge aufnehmen und bei Bedarf wieder abgeben. Dies geht sowohl nur an einem der Drehpunkte als auch an beiden Drehpunkten gleichzeitig. Die Wellenbahn kann derart eingerichtet sein, dass eine Fixierung (z.B. in der Mitte) zwischen den beiden Drehpunkten die Kabelführung an Ort und Stelle hält.

Somit kann sich die Wellenbahn in Antwort auf eine auf das Kabel wirkende Zugkraft (z.B. bei Änderung des Drehwinkels am Drehpunkt) dehnen und/oder entsprechend bei einer Druckkraft zusammenziehen. Dies wird für beide Drehpunkte und beide Richtungen ermöglicht. Beispielsweise kann die Kabelführung verwendet werden an einem Standfuß für ein Display (auch als Monitor bezeichnet) oder für einen PC (Personal Computer), z.B. einen sogenannten All-in-one-Computer. Unter einem All-in-one-Computer versteht man einen stationären Computer, bei dem Hauptplatine und Monitor in einem gemeinsamen Gehäuse untergebracht sind. Die beiden Drehpunkte ermöglichen verschiedene Positionierungen des Displays.

Es zeigen
- Figuren 1 bis 11: jeweils eine Kabelführung gemäß verschiedenen Ausführungsformen in verschiedenen schematischen Ansichten;
- Figuren 12A und 12B: jeweils einen Kabelkanal gemäß verschiedenen Ausführungsformen in verschiedenen schematischen Ansichten; und
- Figuren 13 bis 18: jeweils eine Vorrichtung gemäß verschiedenen Ausführungsformen in verschiedenen schematischen Ansichten.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Gemäß verschiedenen Ausführungsformen kann der Begriff "gekoppelt" oder "Kopplung" im Sinne einer (z.B. mechanischen, hydrostatischen, thermischen und/oder elektrischen), z.B. direkten oder indirekten, Verbindung und/oder Wechselwirkung verstanden werden. Mehrere Elemente können beispielsweise entlang einer Wechselwirkungskette miteinander gekoppelt sein, entlang welcher die Wechselwirkung (z.B. ein Signal) übertragen werden kann. Beispielsweise können zwei miteinander gekoppelte Elemente eine Wechselwirkung miteinander austauschen, z.B. eine mechanische, hydrostatische, thermische und/oder elektrische Wechselwirkung. Gemäß verschiedenen Ausführungsformen kann "gekuppelt" im Sinne einer mechanischen (z.B. körperlichen bzw. physikalischen) Kopplung verstanden werden, z.B. mittels eines direkten körperlichen Kontakts (z.B. eines Formschlusses, Kraftschlusses oder Stoffschlusses). Eine Kupplung kann eingerichtet sein, eine mechanische Wechselwirkung (z.B. Kraft, Drehmoment, etc.) zu übertragen.

Im Folgenden wird sich unter anderem auf einzelne Komponenten (z.B. Kabelkanal, Kanalsegment, Seitenwand) der Kabelführung bezogen, die mehrfach vorhanden sind. Das für die einzelne Komponente Beschriebene kann dann in Analogie für jede der Komponenten gelten.

Im Folgenden werden verschiedene Abmessungen und Parameter für die Kabelführung angegeben (z.B. Ausgangslänge, Breite, Sinuosität, usw.). Diese Abmessungen und Parameter können auf den Ausgangszustand (d.h. in welchem die Kabelführung in ihrer Ausgangsform ist) bezogen sein, z.B. ohne dass Kabel darin aufgenommen sind.

Die gemäß verschiedenen Ausführungsformen bereitgestellt Kabelführung kann eine geringe Bauform bei großem Verformungsvermögen bereitstellen, ohne bewegliche Teile zu benötigen.

Wird ein Kabel über einen beweglichen Drehpunkt verlegt, besteht die Gefahr, dass das Kabel durch Zug oder Druck beschädigt wird oder im weiteren Verlauf ein Stecker aus der Dose gezogen wird. Die gemäß verschiedenen Ausführungsformen bereitgestellte Kabelführung minimiert dieses Risiko, indem diese in beide Richtungen Kabel nachgeben kann und bei Bedarf wieder in die Mäanderform (z.B. Wellenform) zurücknimmt.

Wenn wenig Bauraum vorhanden ist, aber einer große Anzahl von Kabeln zu verlegen ist, lassen sich die meisten herkömmlichen Lösungen zum Längenausgleich nicht mehr ohne weiteres einsetzen. Gemäß verschiedenen Ausführungsformen werden die Kabel flach nebeneinander geführt, was verhindert, dass das sich die Kabel gegenseitig beeinflussen. Ferner kann Zug/Druck gleichmäßig auf alle Kabel verteilt werden, welchen die Wellenform aufnimmt.

Durch eine Mäanderform (z.B. Wellenform) in Kombination mit einer geeigneten Materialauswahl (z.B. ein Elastomer) bzw. Materialwandstärke können verschiedene Kabel in die Mäanderform (z.B. Wellenform) gezwungen werden (z.B. eine gezwungene Verlegung entlang einer Wellenbahn). Wird ein einseitiger Zug auf das Kabel ausgeübt, flacht der Mäanderbogen (anschaulich die Wellenform) ab, so dass Kabel freigegeben wird, welches z.B. am Drehpunkt benötigt wird. In analoger Weise vergrößert sich die Amplitude des Mäanderbogens (beispielsweise des Wellenbergs), wenn ein Druck auf das Kabel ausgeübt wird, so dass Mäanderform das Kabel aufnimmt. Dies gilt in Analogie für einen zweiseitigen Druck/Zug und andere Mäanderformen (wie beispielsweise eine Wellenform).

Im Allgemeinen kann jedes der Kanalsegmente einen oder mehr als einen Mäanderbogen aufweisen, z.B. zwei oder mehr Mäanderbögen. Je mehr Mäanderbogen verwendet werden, desto mehr Längenänderung kann erreicht werden.

Gemäß verschiedenen Ausführungsformen gibt die Kabelführung dem Kabel in eine Wellenform (oder andere Mäanderform) vor. Die Mäanderform ermöglicht, mehr Kabellänge speichern zu können als wenn das Kabel entlang eines linearen Pfads zwischen 2 Punkten verlegt wäre. Wird Zug auf das Kabel in Mäanderform ausgeübt, flacht sich die Mäanderform ab und gibt von der gespeicherten Kabellänge ab. Dasselbe gilt andersherum für Druck.

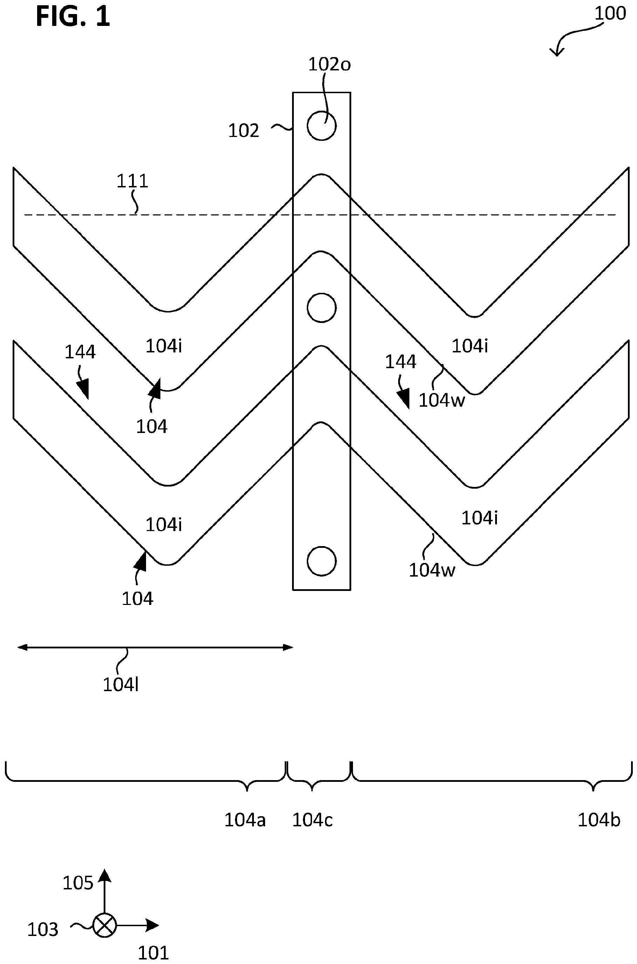

**Fig.1** veranschaulicht eine Kabelführung 100 gemäß verschiedenen Ausführungsformen in einer schematischen Seitenansicht oder Querschnittsansicht (z.B. mit Blickrichtung auf eine Oberseite der Kabelführung 100).

Die Kabelführung 100 kann eine Befestigungsstruktur 102 und mehrere (z.B. 2, 3, 4, 5, 6, 7, 8, 9, 10 oder mehr) Führungskanäle 104 (auch als Kabelkanäle bezeichnet) aufweisen. Die Führungskanäle 104 können entlang einer Richtung 105 (auch als Amplitudenrichtung 105 bezeichnet) nebeneinander angeordnet sein. Die Amplitudenrichtung 105 kann quer zu der Ausgleichsrichtung 101 sein. Die Führungskanäle 104 können untereinander mittels der Befestigungsstruktur 102 (die z.B. entlang der Amplitudenrichtung 105 längserstreckt ist) gekuppelt sein. Jeder der Führungskanäle 104 kann mäanderförmig (z.B. einfach oder mehrfach Tilde-förmig) sein, z.B. anschaulich eine geschwungene Form aufweisen.

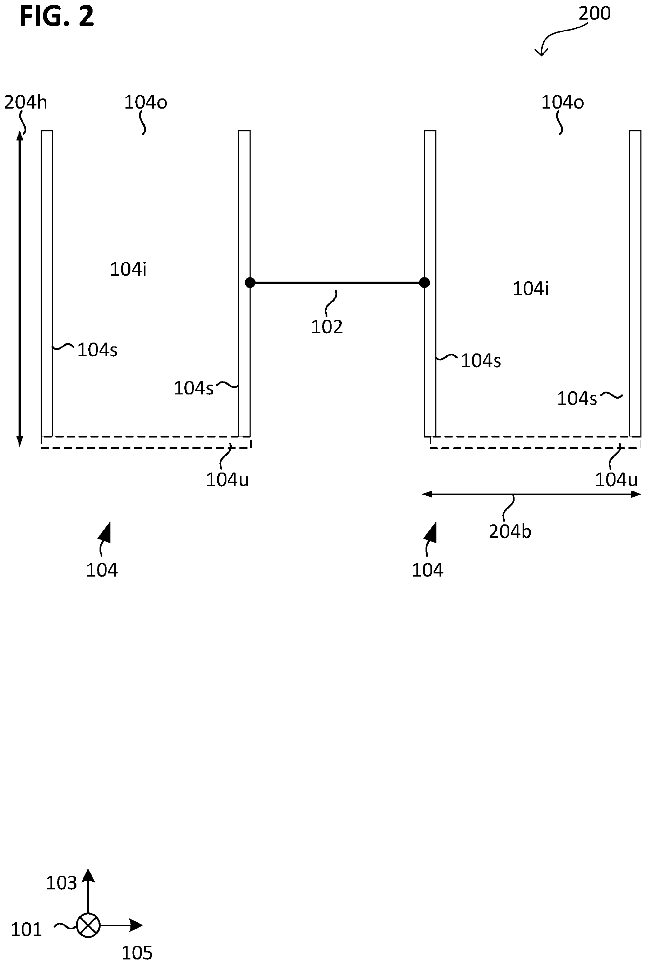

Als Kabelkanal kann hierin ein Hohlkörper verstanden werden, welcher einen längserstreckten Hohlraum (auch als Kanalinneres bezeichnet) aufweist (vgl. auch Fig.2), der stirnseitig geöffnet ist (die stirnseitigen Öffnungen werden auch als Kanaleingang und Kanalausgang bezeichnet).

Ferner weist jeder der Führungskanäle 104 zwei mäanderbogenförmige Kanalsegmente 104a, 104b auf, zwischen denen die Befestigungsstruktur 102 angeordnet ist. Jedes der Kanalsegmente 104a, 104b kann einen oder mehr als einen Mäanderbogen aufweisen.

Als Mäander wird ein (z.B. gekrümmter und/oder abgewinkelter) Bogen in einer Abfolge weiterer Bögen (auch als Mäanderbogen bezeichnet) bezeichnet. Im Allgemeinen kann der Bogen kontinuierlich gekrümmt, ein oder mehrfach abgewinkelt oder eine Mischung daraus sein. Beispielsweise kann eine Mäanderform eine Wellenform (z.B. gekrümmter Verlauf), eine Zick-Zack-Form (z.B. einfach abgewinkelter Verlauf), eine Rechteckform (z.B. einfach mehrfach Verlauf) oder eine Mischung daraus als aufweisen. Es können selbstverständlich auch komplexere Bogenformen verwendet werden. Je gleichmäßiger der Bogen verläuft (z.B. gekrümmt ist), desto schonender ist dies für das Kabel.

Ein mäanderförmiger Kabelkanal 104 kann verstanden werden, als dass dessen Kontur bzw. Verlauf (z.B. dessen Kanalsegment) von einer geradlinigen (z.B. quaderförmigen) Kontur abweicht. Der Verlauf eines mäanderförmigen Kabelkanals kann beispielsweise bezüglich einer geraden Linie 111 ausgelenkt sein, z.B. derart, dass der mäanderförmige Kabelkanal abschnittsweise (d.h. an den Bögen) neben der Linie 111 angeordnet ist. Die Linie 111 kann entlang der Ausgleichsrichtung 101 verlaufen und/oder die Endabschnitte (d.h. die stirnseitigen Enden) des Kabelkanals 104 schneiden. Mit anderen Worten kann der mäanderförmige Kabelkanal mehrere Abschnitte (auch als Mäanderbögen bezeichnet) aufweisen, an sich der Verlauf des Kabelkanals von der Linie 111 entfernt und dann wieder an diese annähert. Die Linie 111 kann den Kabelkanal dann zwischen jeweils zwei einander unmittelbar benachbarten Mäanderbögen (und optional dessen Endabschnitten) schneiden.

Die Richtung der Auslenkung des oder jedes mäanderförmigen Kabelkanals 104 von der Line 111 kann innerhalb einer Ebene 103, 105 liegen, die von der Amplitudenrichtung 103 und der Ausgleichsrichtung 101 aufgespannt wird. Analog zu einer Schwingung kann die Amplitude ein Maß für den Abstand des Kabelkanals 104 von Linie 111 sein.

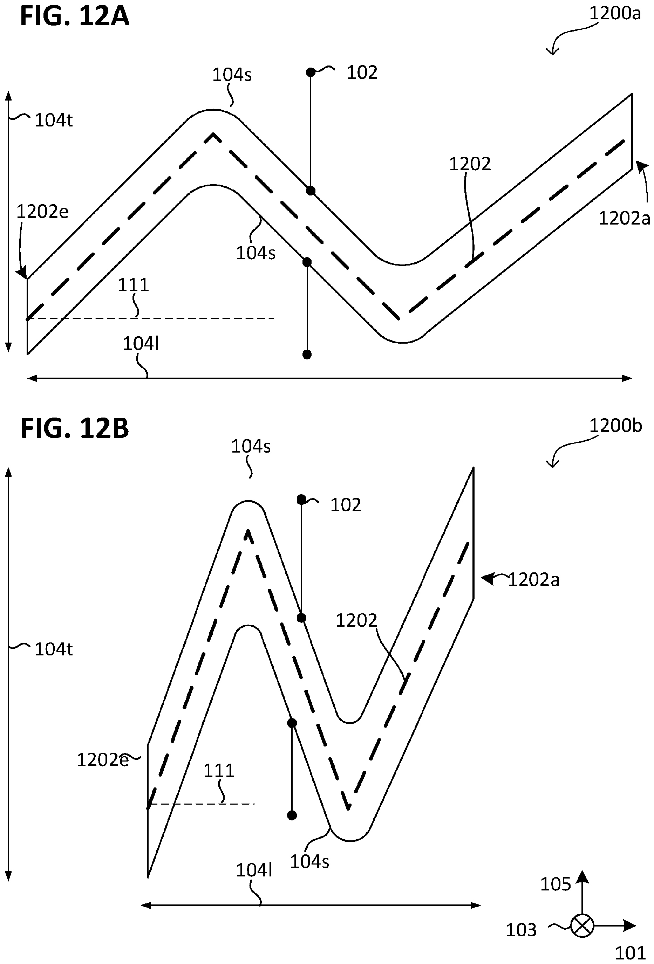

Beispielsweise kann ein Pfad 1202 (vgl. Fig.12A), entlang dessen der Führungskanal 104 bzw. ein Kanalsegment 104a, 104b erstreckt ist, zumindest einmal (z.B. mehrmals) die Richtung wechseln, entlang welcher sich der Pfad 1202 erstreckt. Beispielsweise kann der Pfad 1202 einen oder mehr als einen Bogen aufweisen, wobei beispielsweise jeder der Kanalsegmente mindestens eine der Bögen aufweist. Der Pfad 1202 kann beispielsweise schlangenlinienförmig sein.

Ein Mäanderbogen kann beispielsweise analog zu einer Schlinge einen geknickten oder gekrümmten Verlauf aufweisen, ohne dass die Krümmungsrichtung bzw. Knickrichtung wechselt.

Beispielsweise kann jeder der Führungskanäle 104 zwischen den zwei Kanalsegmenten 104a, 104b ein Verbindungssegment 104c (auch als verbindendes Kanalsegment 104c bezeichnet) aufweisen, welche die zwei Kanalsegmente 104a, 104b miteinander und mit der Befestigungsstruktur 102 kuppelt.

Beispielsweise kann die Mäanderform derart eingerichtet sein, dass ein erster Führungskanal (z.B. jedes der Kanalsegmente) um einen Bereich 144 herum erstreckt ist, in welchen ein zweiter Führungskanal hineinragt. Mit anderen Worten können die mehreren Führungskanäle (z.B. bezüglich der Ausgleichsrichtung 101) einander überlappen. Dies spart Platz.

Beispielsweise kann die Mäanderform der mehreren Führungskanäle 104 zueinander kongruent sein. Dies verringert Kollisionen bei der Verformung.

Die Mäanderform ermöglicht es, dass die Kanalsegmente 104a, 104b entlang einer Richtung 101 (vereinfacht auch als Ausgleichsrichtung 101 bezeichnet) zu der Befestigungsstruktur 102 hin gestaucht und/oder von der Befestigungsstruktur weg gedehnt werden können (beides allgemeiner auch als Verformung bezeichnet). Dies verändert die Länge 1041 des Führungskanals 104 entlang der Ausgleichsrichtung 101. Eine beispielhafte Krümmung der Mäanderform kann beim Stauchen zunehmen und beim Dehnen entsprechend abnehmen.

Ferner können die mäanderbogenförmigen Kanalsegmente 104a, 104b (z.B. deren Material) federelastisch eingerichtet sein. Federelastisch kann verstanden werden, als dass ein Körper (z.B. dessen Material) elastisch verformt werden kann entgegen einer Rückstellkraft (die sogenannte Federkraft), welche den Körper in seine Ausgangsform zurück bringt. Vereinfacht kann die Verformung ausgedrückt werden als Längenänderung ΔL = L-L₀ des Körpers oder als Verhältnis ε zwischen ΔL zu Ausgangslänge L₀ (d.h. der Länge der Ausgangsform bzw. der ursprünglichen Länge) des Körpers, d.h. ε = ΔL/L₀. Die Rückstellkraft kann (z.B. bis zur Streckgrenze) im Wesentlichen linear von dem Maß der Verformung (z.B. der Längenänderung ΔL) abhängen und in der Ausgangsform null sein. Bestimmte Materialien können allerdings auch komplexere Zusammenhänge der Verformung oder Streckgrenze aufweisen.

Die federelastische Verformung kann im Wesentlichen frei von einer plastischen Verformung sein, d.h. dass die auf die Ausgangslänge L₀ des Körpers bezogene bleibende Dehnung (d.h. plastische Dehnung) nach Entlastung weniger als 1 % beträgt. Dies erreicht, dass die Verformung der mäanderbogenförmigen Kanalsegmente 104a, 104b im Wesentlichen reversibel ist. Beispielsweise kann verstanden werden, als dass die federelastische Verformung unterhalb der Streckgrenze erfolgt. Ist die Streckgrenze beispielsweise im Zugversuch nicht eindeutig identifizierbar, kann stattdessen die sogenannte 0,2-%-Dehngrenze als Streckgrenze definiert werden. Die 0,2-%-Dehngrenze ist diejenige (einachsige) mechanische Spannung, bei der die auf die Anfangslänge L₀ des Körpers bezogene bleibende Dehnung (d.h. plastische Dehnung) nach Entlastung genau ε = 0,2 % beträgt.

Die Befestigungsstruktur 102 kann beispielsweise im Wesentlichen längserstreckt sein und eine oder mehr als eine Durchgangsöffnung 102o (auch als Befestigungsöffnungen 102o bezeichnet) aufweisen. Mittels der Befestigungsöffnungen 102o kann die Kabelführung 100 an der Befestigungsstruktur 102 befestigt werden. Beispielsweise können Schrauben in die Befestigungsöffnungen 102o gesteckt werden. Alternativ oder zusätzlich zu den Befestigungsöffnungen 102o können auch andere Formschlusselemente (auch als Fixierungselemente bezeichnet) verwendet werden, beispielsweise Schnapper, Laschen, Nippel, Nut und Feder, oder Ähnliches.

Beispielsweise können Formschlusselemente, ausgeführt als Langloch 102o zur Befestigung an einer Trägerstruktur zwischen den Drehpunkten verwendet werden. Alle Mäanderbögen (z.B. Wellenbögen) können optional mittels Verbindungsstegen miteinander gekuppelt sein, wie später noch genauer beschrieben wird, was es erleichtert, das Kabel in die Mäanderform zu legen.

Mittels der mittigen Anordnung der Befestigungsstruktur 102 kann ein Längenausgleich in beide Richtungen unabhängig voneinander erfolgen. Bei einer unsymmetrischen Anordnung der Befestigungsstruktur kann auch erreicht werden, dass dem einen oder anderen Ende mehr Längenausgleich zur Verfügung gestellt wird.

**Fig.2** veranschaulicht eine Kabelführung 200 gemäß verschiedenen Ausführungsformen in einer schematischen Seitenansicht oder Querschnittsansicht (z.B. mit Blickrichtung aus der Ausgleichsrichtung 101), z.B. eingerichtet wie die Kabelführung 100.

Das Kanalinnere 104i des oder jedes Kabelkanals 104 kann dem Verlauf des Kabelkanals 104 folgen. In dem Kanalinneren 104i kann wahlweise ein oder mehr als ein Kabel angeordnet sein oder werden. Der oder jeder Kabelkanal 104 (z.B. jedes der Kanalsegmente 104a, 104b) kann entsprechend einen mäanderbogenförmigen Abschnitt des Kanalinneren 104i aufweisen. Der Kabelkanal 104 kann mehrere (z.B. zwei oder mehr, z.B. drei) Kanalwände 104s, 104u aufweisen, welche das Kanalinnere 104i begrenzen, von denen beispielsweise zumindest zwei Seitenwände 104s das Kanalinnere 104i auf einander gegenüberliegenden Seiten des Kanalinneren 104i begrenzen.

Optional kann der oder jeder Kabelkanal 104 eine Bodenwand 104u aufweisen. Die Bodenwand 104u kann beispielsweise eine Vielzahl von Durchgangsöffnung aufweisen. Dies verbessert die Verformbarkeit des Kabelkanals 104. Die Durchgangsöffnung können derart eingerichtet sein, dass zwischen den Durchgangsöffnung lediglich Stege (auch als Boden-Verbindungsstege bezeichnet) als Bodenwand 104u verbleiben, welche die Seitenwände 104s eines Kabelkanals 104 miteinander kuppeln, wie später noch genauer beschrieben wird.

Die Seitenwände 104s jedes Kabelkanals 104 können untereinander (z.B. paarweise) gekuppelt sein, z.B. mittels der Befestigungsstruktur 102. Alternativ oder zusätzlich können die zwei Seitenwände 104s eines Kabelkanals 104 mittels der Bodenwand 104u (z.B. deren Boden-Verbindungsstegen) und/oder Ähnlichem gekuppelt sein.

Der oder jeder Kabelkanal 104 kann ferner eine Öffnung 104o (z.B. auf der Oberseite) aufweisen, welche das Kanalinnere 104i freilegt (z.B. in Richtung 103). Die Öffnung 104o kann beispielsweise ununterbrochen oder zumindest abschnittsweise ununterbrochen von einem Endabschnitt zum anderen Endabschnitt des Führungskanals 104 (z.B. entlang des gesamten mäanderförmigen Verlaufs) erstreckt sein. Dies erleichtert es, ein Kabel in dem Kanalinneren 104i anzuordnen. Optional kann der oder jeder Kabelkanal 104 auch einen Kanaldeckel aufweisen zum Verschließen der Öffnung 104o oder eine Kanaldecke (ähnlich wie der Bodenwand 104u eingerichtet) aufweisen.

Die Breite 204b und Höhe 204h jedes Führungskanals kann an das zu verwendende Kabel angepasst sein, wie später noch genauer beschrieben wird.

Durch eine geeignete Materialwahl und die Wahl der Wandstärke der Seitenwände können verschiedene Kabeltypen, speziell die Biegesteifigkeit der Kabel, berücksichtigt werden. Das Material der Kabelführung 200 (z.B. der Befestigungsstruktur und/oder der Kabelkanäle) kann beispielsweise ein Polymer sein, z.B. ein Elastomer (stellt eine große Streckgrenze bereit) und/oder ein Thermoplast (ermöglicht dessen Herstellung mittels eines Gusses oder Drucks, z.B. mittels eines 3D-Druckes). Es können aber auch andere Materialien verwendet werden, z.B. ein Metall (z.B. Federblech).

Beispielsweise kann die Höhe 204h des oder jedes Führungskanals 104 (z.B. dessen Kanalinneren 104i) größer sein als ungefähr 1 mm (Millimeter), z.B. in einem Bereich sein von ungefähr 1 mm bis ungefähr 20 mm, z.B. z.B. in einem Bereich sein von ungefähr 2 mm bis ungefähr 10 mm. Beispielsweise kann Breite 204b des oder jedes Führungskanals 104 (z.B. dessen Kanalinneren 104i) größer sein als ungefähr 1 mm, z.B. in einem Bereich sein von ungefähr 1 mm bis ungefähr 20 mm, z.B. z.B. in einem Bereich sein von ungefähr 2 mm bis ungefähr 10 mm. Beispielsweise kann eine Wandstärke der oder jeder Seitenwand 104s (deren Ausdehnung entlang der Amplitudenrichtung 105) größer sein als ungefähr 0,1 mm (z.B. als ungefähr 0,5 mm), z.B. in einem Bereich sein von ungefähr 0,1 mm bis ungefähr 3 mm (z.B. bis ungefähr 2 mm). Es kann verstanden werden, dass diese Dimensionen anwendungsspezifisch an das Kabel (z.B. dessen Biegesteifigkeit) und das verwendete Material für die Seitenwand 104s angepasst werden können.

Beispielsweise kann die Breite 204b ungefähr der Höhe 204h entsprechen. Dies ist besonders geeignet für runde Kabel. Alternativ kann die Breite 204b kleiner als die Höhe 204h. Dies ist besonders geeignet für flache Kabel.

Obwohl nicht dargestellt, kann optional die eine oder mehr als eine Seitenwand 104s des oder jedes Führungskanals 104 eine oder mehr als eine Durchgangsöffnung aufweisen. Die Durchgangsöffnung(en) können derart eingerichtet sein, dass zwischen den Durchgangsöffnung lediglich Stege (auch als Boden-Verbindungsstege bezeichnet) als Seitenwand 104s verbleiben, welche das Kabel in die Mäanderform zwingen. Ein Steg der Seitenwand 104s kann beispielsweise in Form eines Dorns bereitgestellt sein oder werden, der an der Bodenwand abgestützt ist.

Obwohl nicht dargestellt, kann die Kabelführung 200 optional eine oder mehr als eine Feder (z.B. ein Metall oder ein Polymer aufweisend) aufweisen, welche die Rückstellkraft bereitstellt. Dies erreicht ein höheres Rückstellvermögen.

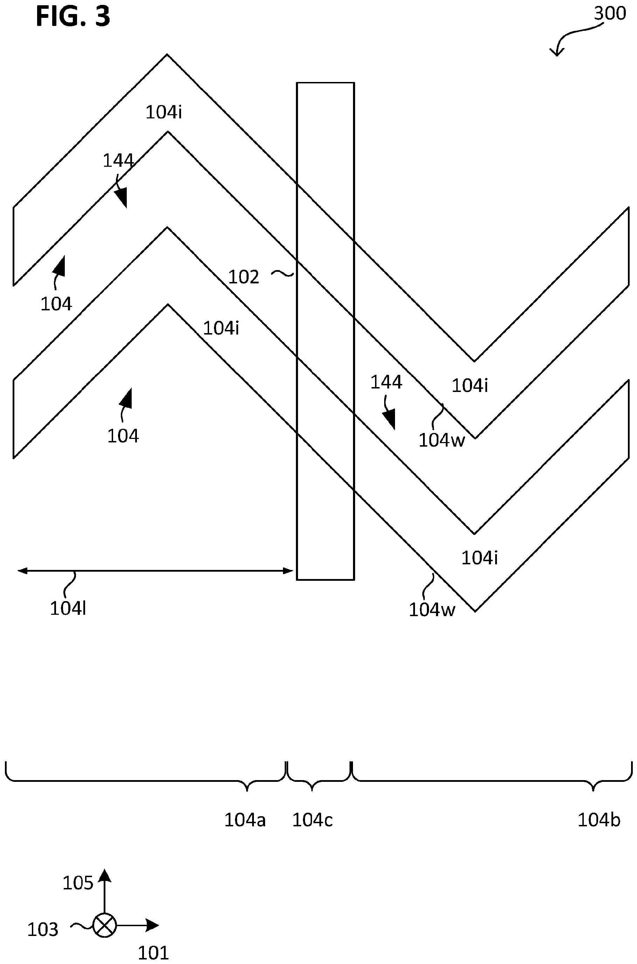

**Fig.3** veranschaulicht eine Kabelführung 300 gemäß verschiedenen Ausführungsformen in einer schematischen Seitenansicht oder Querschnittsansicht (z.B. mit Blickrichtung auf eine Oberseite der Kabelführung 300), z.B. eingerichtet wie die Kabelführung 100 oder 200, mit dem Unterschied, dass das Verbindungssegment 104c geradlinig verläuft.

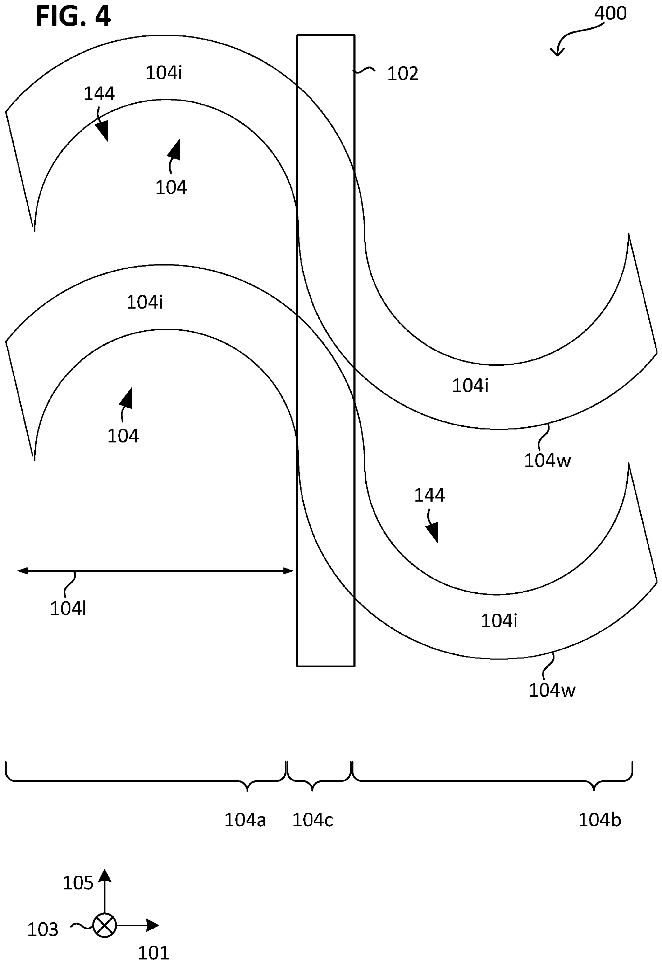

**Fig.4** veranschaulicht eine Kabelführung 400 gemäß verschiedenen Ausführungsformen in einer schematischen Seitenansicht oder Querschnittsansicht (z.B. mit Blickrichtung auf eine Oberseite der Kabelführung 400), z.B. eingerichtet wie eine der Kabelführungen 100 bis 300, mit dem Unterschied, dass die Mäanderform eine Krümmung aufweist.

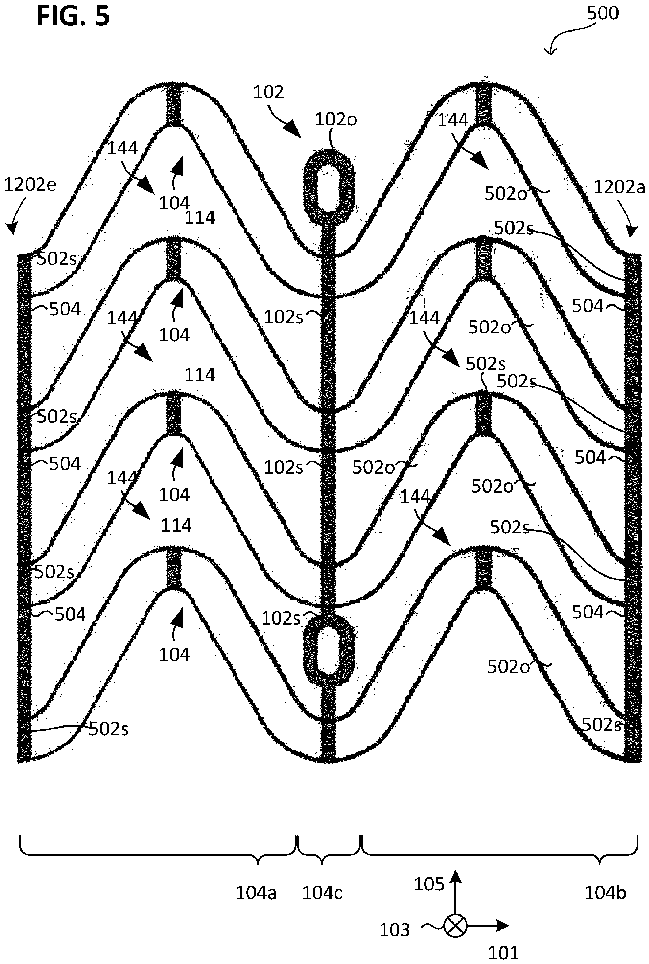

**Fig.5** veranschaulicht eine Kabelführung 500 gemäß verschiedenen Ausführungsformen in einer schematischen Seitenansicht oder Querschnittsansicht (z.B. mit Blickrichtung auf eine Oberseite der Kabelführung 500), z.B. eingerichtet wie eine der Kabelführungen 100 bis 400, mit dem Unterschied, dass die Kabelführung 500 vier Kabelkanäle 104 aufweist. Die Kabelkanäle 104 können eine Wellenform aufweisen, wobei beispielsweise jedes der zwei Kanalsegmente 104a, 104b jedes Kabelkanals 104 zumindest einen Wellenbogen aufweisen kann.

Ferner sind die Verbindungsstege der Kabelführung 500 (vereinfacht auch als Stege bezeichnet) dargestellt.

Beispielsweise für die Verbindungsstege der Kabelführung 500 können aufweisen: Boden-Verbindungsstege 502s, Befestigungsstruktur-Verbindungsstege 102s und/oder Rand-Verbindungsstege. Die Stege 504, 502s, 102s können entlang der Amplitudenrichtung 103 längsersteckt sein. Die Verwendung von Stegen 504, 502s, 102s spart im Allgemeinen Material. Ferner benötigten diese weniger Bauraum, da zusätzlich zu dem Kabel (z.B. dessen Kabeldicke) nur noch die Höhe der Verbindungsstege Bauraum benötigen.

Der Kabelboden kann die Boden-Verbindungsstege 502s und Durchgangsöffnung 502o aufweisen. Beispielsweise kann der Kabelboden jedes Kanalsegments 104a, 104b zwei oder mehr Durchgangsöffnung aufweisen, welche mittels eines Boden-Verbindungssteges 502s voneinander räumlich separiert sind. Beispielsweise kann ein oder mehr als ein (z.B. zwei oder mehr, z.B. drei oder mehr) Boden-Verbindungssteg 502s eines Führungskanals 104 dessen Seitenwände 104s miteinander kuppeln. Die Seitenwände 104s können untereinander beispielsweise jeweils an den Wellenbögen mittels der Boden-Verbindungsstege 502s verbunden sein, damit ein in dem Kabelkanal 104 aufgenommenes Kabel ebenso die Wellenform annimmt.

Die Befestigungsstruktur-Verbindungsstege 102s (d.h. Stege der Befestigungsstruktur 102) können die Kabelkanäle 104 miteinander und/oder deren Seitenwände 104s miteinander kuppeln. Die Befestigungsstruktur-Verbindungsstege 102s können zwei oder mehr Fixierungspunkte aufweisen, beispielsweise bereitgestellt mittels eines Langlochs 102o zur Befestigung an einem Bauteil zwischen dessen Gelenken. Mittels der (z.B. mittigen) Anordnung der Befestigungsstruktur 102 zwischen den zwei Kanalsegmenten 104a, 104b kann ein Längenausgleich in beide Richtungen unabhängig voneinander erfolgen.

Eine Stirnseite des oder jedes Kanalsegments 104a, 104b, die der Befestigungsstruktur 102 gegenüberliegt, kann einen Kanaleingang 1202e bzw. Kanalausgang 1202a bereitstellen, durch welchen ein Kabel in den Führungskanal hinein bzw. aus diesem heraus erstreckt ist. Die Kabelführung 500 kann zwei Gruppen Rand-Verbindungsstege 504 aufweisen, von denen eine erste Gruppe Verbindungsstege 504 jeweils einander unmittelbar benachbarte Kabeleingänge 1202e und eine zweite Gruppe Verbindungsstege 504 jeweils einander unmittelbar benachbarte Kabelausgänge 1202a miteinander kuppelt. Dies erreicht eine größere Stabilität.

Bei unsymmetrischer Anordnung der Befestigungsstruktur 102 (z.B. mehr linksseitig oder mehr rechtsseitig) kann erreicht werden, dass ein erstes Kanalsegment 104a des Kabelkanals 104 mehr Längenausgleich zur Verfügung stellt als ein zweites Kanalsegment 104b des Kabelkanals 104.

Gemäß verschiedenen Ausführungsformen kann jeder Führungskanal 104 eingerichtet sein, ein oder mehr als ein Kabel aufzunehmen, welches dann durch das Kabelinnere hindurch erstreckt ist, z.B. an dem Kanaleingang hinein und an dem Kanalausgang hinaus. Optional können die jeweils einander unmittelbar benachbarten Führungskanäle 104 einen Abstand voneinander aufweisen, der im Wesentlichen dem Abstand der Seitenwände 104s eines der Führungskanäle voneinander entspricht (z.B. weniger als 30% Abweichung davon). Dies erreicht, dass zwischen den jeweils einander unmittelbar benachbarten Führungskanälen 104 ein Zwischenraum 114 bereitgestellt wird, in welche ein oder mehr als ein Kabel aufgenommen werden kann. Dies vergrößert die Kapazität der Kabelführung 500. Beispielsweise können bei n Führungskanälen 104 zusätzlich n-1 Zwischenräume 114 bereitgestellt sein oder werden (wobei beispielsweise n = 1, 2, 3, 4, 5, ..., 10 oder mehr ist) .

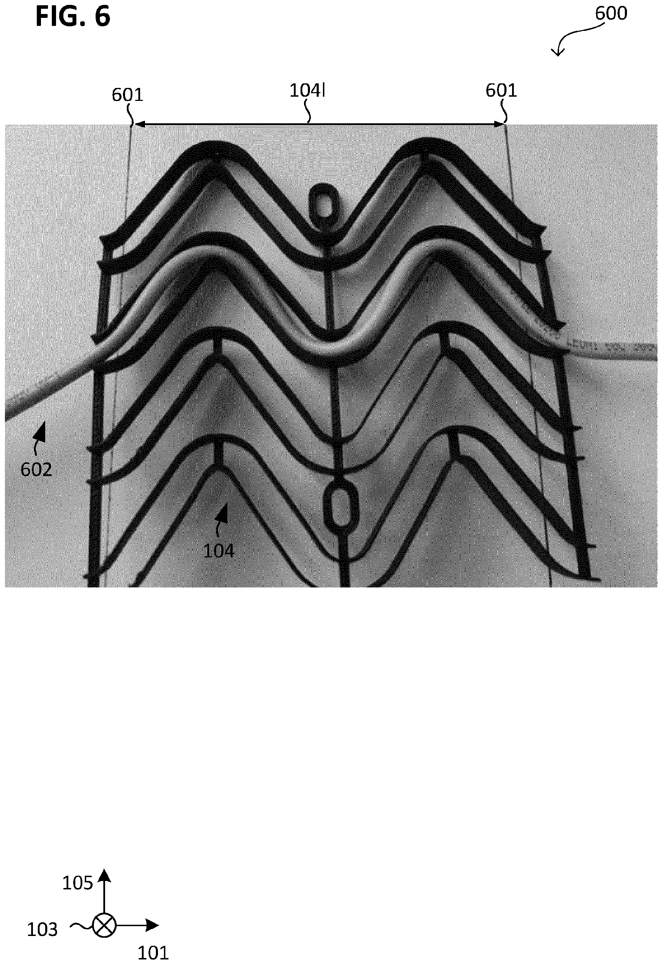

**Fig.6** veranschaulicht die Kabelführung 500 in einem Ausgangszustand 600 gemäß verschiedenen Ausführungsformen in einer schematischen Seitenansicht oder Querschnittsansicht (z.B. mit Blickrichtung auf eine Oberseite der Kabelführung).

In dem Ausgangszustand 600 (der sogenannten Ausgangsform) können die einander gegenüberliegenden Endabschnitte 601 (auch als Kanaleingang bzw. Kanalausgang bezeichnet) eines Führungskanals 104 einen ersten Abstand 1041 (auch als Ausgangslänge L₀ des Führungskanals 104 bezeichnet) voneinander aufweisen.

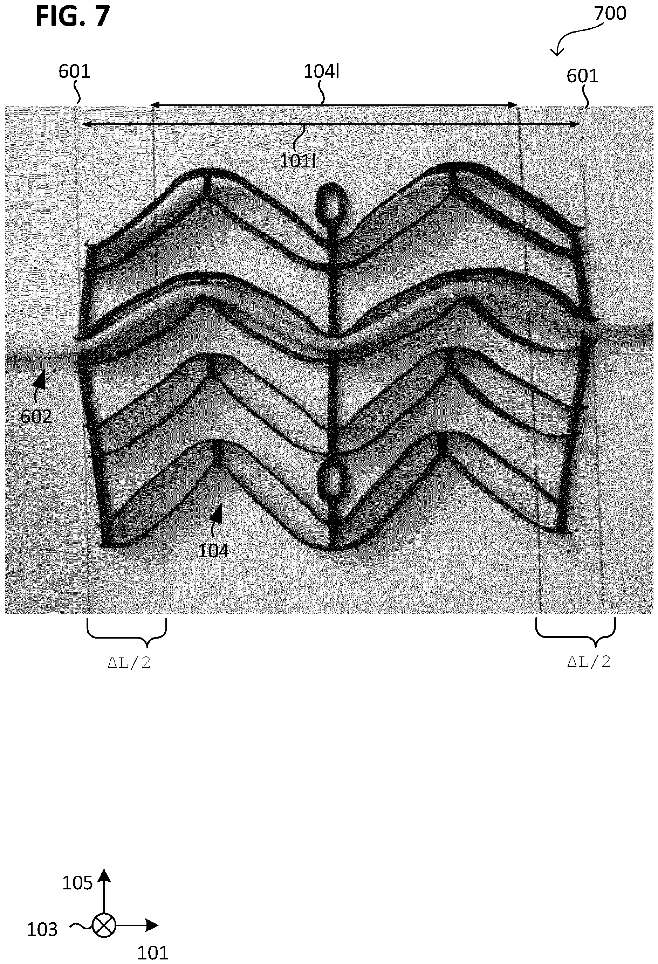

**Fig.7** veranschaulicht die Kabelführung 500 in einem gedehnten Zustand 700 gemäß verschiedenen Ausführungsformen in einer schematischen Seitenansicht oder Querschnittsansicht (z.B. mit Blickrichtung auf eine Oberseite der Kabelführung).

Beim Dehnen der Kabelführung 500 kann der Abstand der Endabschnitte 601 eines Führungskanals 104 voneinander zunehmen bzw. dessen Amplitude abnehmen.

In dem gedehnten Zustand 700 können die einander gegenüberliegenden Endabschnitte 601 eines Führungskanals 104 einen zweiten Abstand 1011 voneinander aufweisen, der größer ist als der erste Abstand 1041. Die Verformung ε = ΔL/L₀ des gedehnten Zustands 700 bezüglich der Ausgangsform 600 kann mehr sein als ungefähr 10%, z.B. mehr als ungefähr 15%, z.B. mehr als ungefähr 20%, z.B. mehr als ungefähr 25%, z.B. mehr als ungefähr 30%, z.B. mehr als ungefähr 35%, z.B. mehr als ungefähr 40%. Mit anderen Worten kann beim Dehnen der Kabelführung 500 der Abstand der Endabschnitte 601 des Führungskanals 104 voneinander zunehmen, z.B. um ungefähr 10% oder mehr, z.B. mehr als ungefähr 15%, z.B. mehr als ungefähr 20%, z.B. mehr als ungefähr 25%, z.B. mehr als ungefähr 30%, z.B. mehr als ungefähr 35%, z.B. mehr als ungefähr 40%.

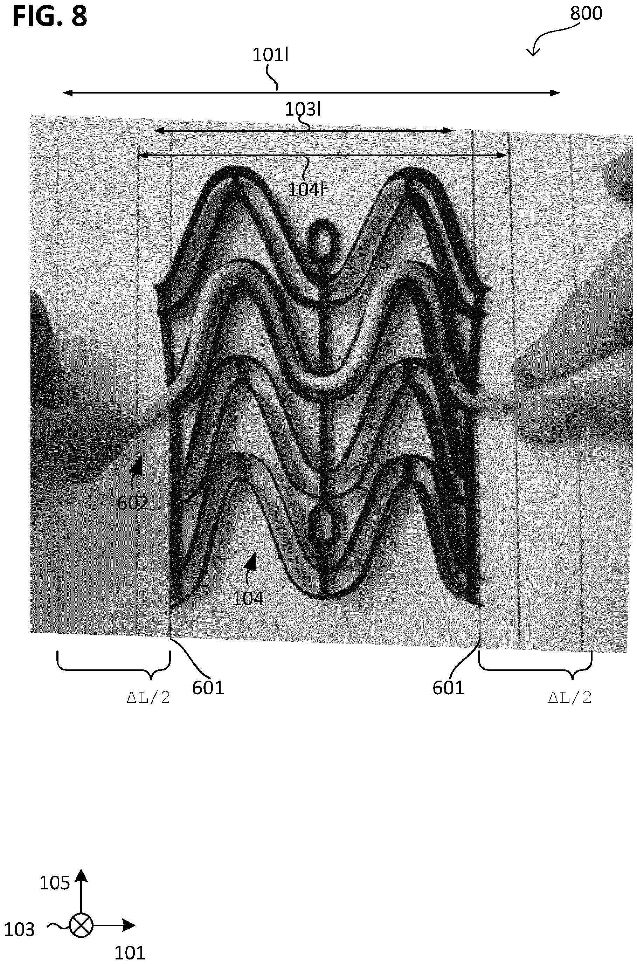

**Fig.8** veranschaulicht die Kabelführung 500 in einem gestauchten Zustand 800 gemäß verschiedenen Ausführungsformen in einer schematischen Seitenansicht oder Querschnittsansicht (z.B. mit Blickrichtung auf eine Oberseite der Kabelführung).

Beim Stauchen der Kabelführung 500 kann der Abstand der Endabschnitte 601 eines Führungskanals 104 voneinander abnehmen bzw. dessen Amplitude zunehmen.

In dem gestauchten Zustand 800 können die einander gegenüberliegenden Endabschnitte 601 eines Führungskanals 104 einen dritten Abstand 1031 voneinander aufweisen, der kleiner ist als der erste Abstand 1041. Die Verformung ε = ΔL/L₀ des gedehnten Zustands 700 bezüglich des gestauchten Zustands 800 kann mehr sein als ungefähr 40%, z.B. mehr als ungefähr 45%, z.B. mehr als ungefähr 50%, z.B. mehr als ungefähr 55%, z.B. mehr als ungefähr 60%, z.B. mehr als ungefähr 65%, z.B. mehr als ungefähr 70%. Mit anderen Worten kann eine Verformung zwischen dem gestauchten Zustand und dem gedehnten Zustand erfolgen, z.B. um ungefähr 40% oder mehr, z.B. mehr als ungefähr 45%, z.B. mehr als ungefähr 50%, z.B. mehr als ungefähr 55%, z.B. mehr als ungefähr 60%, z.B. mehr als ungefähr 65%, z.B. mehr als ungefähr 70%.

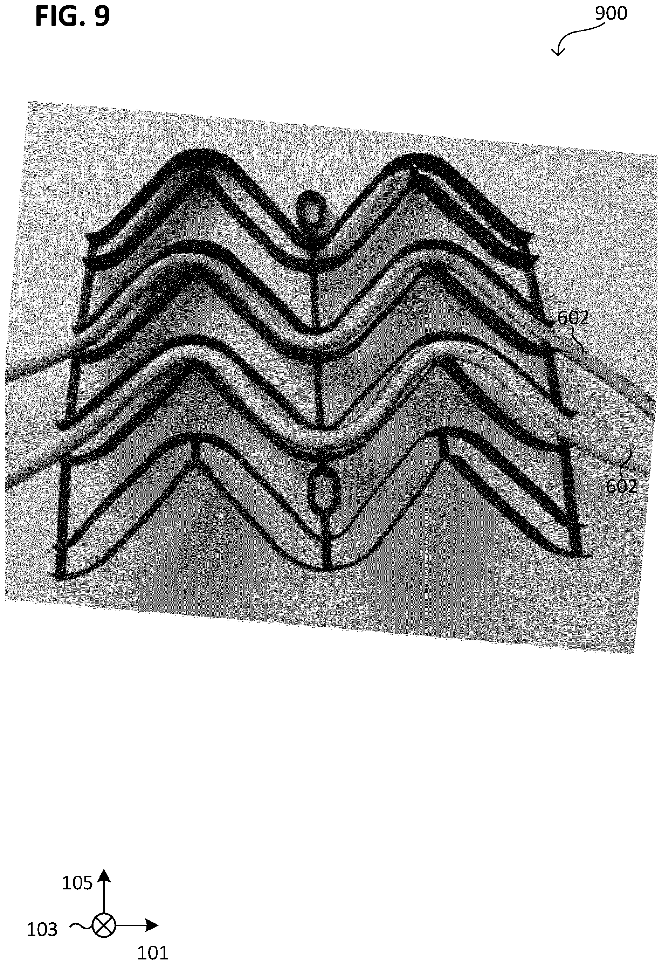

**Fig.9** veranschaulicht die Kabelführung 500 gemäß verschiedenen Ausführungsformen in einer schematischen Seitenansicht oder Querschnittsansicht 900 (z.B. mit Blickrichtung auf eine Oberseite der Kabelführung), wobei in jedem von zwei Führungskanälen ein Kabel 602 aufgenommen ist.

Das oder jedes in einem der Führungskanäle aufgenommene Kabel 602 kann in einem Beispiel ein USB-Kabel sein, z.B. zum Anschluss eines Druckers, einer Kassenlade, einer Tastatur, usw. Es kann allerdings auch ein (z.B. mehradriges) Kabel anderen Kabeltyps verwendet werden. Allgemeiner gesagt, kann das Kabel eine oder mehr als eine elektrische Leitung (auch als Adern bezeichnet) aufweisen, welche in einer isolieren Kabelhülle des Kabels angeordnet sind. Beispielsweise kann zumindest ein (d.h. ein oder mehr als ein) Kabel zur Kommunikation gemäß einem seriellen Bussystem eingerichtet sein. Dies ermöglicht es, miteinander kommunizierende Komponenten eines Systems zu verbinden. Alternativ oder zusätzlich kann zumindest ein Kabel zur Versorgung mit elektrischer Energie eingerichtet sein, z.B. in Form eines Kaltgerätekabels oder eines Niedervoltkabels.

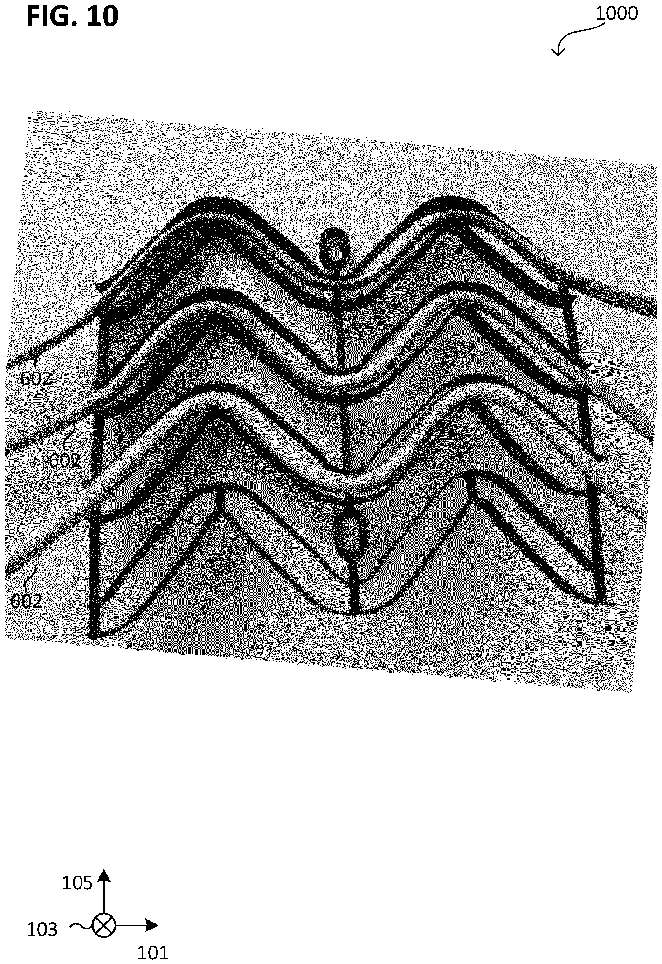

**Fig.10** veranschaulicht die Kabelführung 500 gemäß verschiedenen Ausführungsformen in einer schematischen Seitenansicht oder Querschnittsansicht 1000 (z.B. mit Blickrichtung auf eine Oberseite der Kabelführung), wobei in jedem von drei Führungskanälen ein Kabel 602 aufgenommen ist.

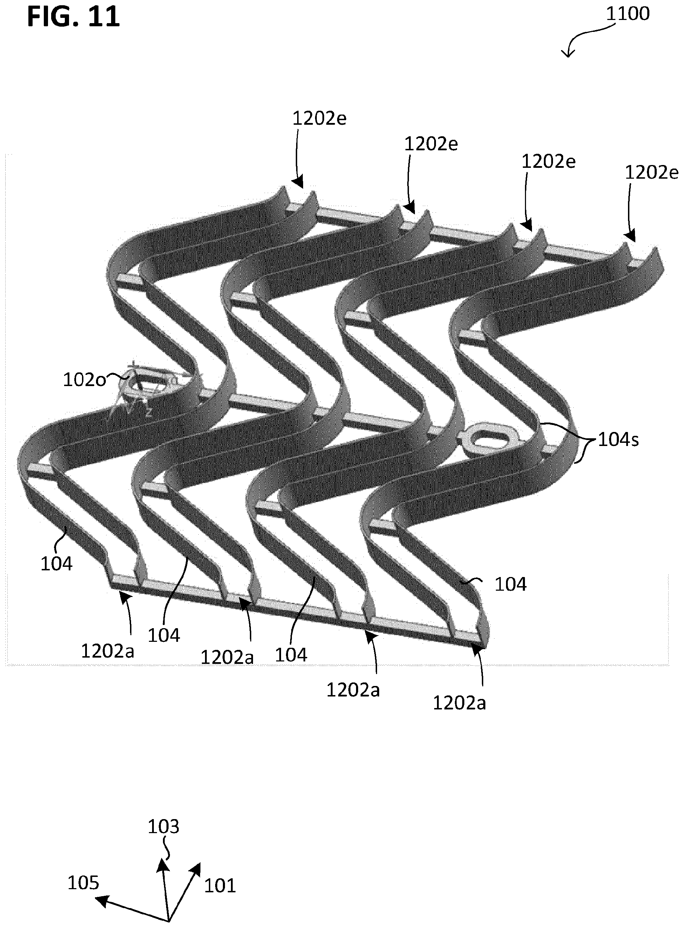

**Fig.11** veranschaulicht die Kabelführung 500 gemäß verschiedenen Ausführungsformen in einer schematischen Perspektivansicht 1100.

**Fig.12A** und **Fig.12A** veranschaulichen jeweils einen Führungskanal 104 einer der Kabelführungen 100 bis 500 gemäß verschiedenen Ausführungsformen in einer schematischen Querschnittsansicht oder Seitenansicht, wobei der Führungskanal 104 in einem gedehnten Zustand 1200b und einem gestauchten Zustand 1200a veranschaulicht ist.

Die Länge 1041 des Führungskanals 104 kann dessen Ausdehnung entlang der Ausgleichsrichtung 101 sein. Mit anderen Worten kann die Länge 1041 des Führungskanals 104 zu dem Abstand des Kanaleingangs 1202e von dem Kanalausgang 1202a (welche das Kanalinnere 104i freilegen) korrespondieren, z.B. auf eine Ebene, in der die Ausgleichsrichtung 101 liegt, projiziert.

Die Breite 104t über Alles (auch als Überallesbreite bezeichnet) des Führungskanals 104 kann dessen Ausdehnung entlang der Amplitudenrichtung 105 sein, z.B. von Umkehrpunkt zu Umkehrpunkt. Mit anderen Worten kann die Breite 104t des Führungskanals 104 zu dem maximalen Abstand der Seitenwände 104s des Führungskanals 104 voneinander (welche das Kanalinnere 104i begrenzen) korrespondieren, z.B. auf eine Ebene, die quer zu der Ausgleichsrichtung 101 ist, projiziert. Mit anderen Worten kann die Überallesbreite 104t des Führungskanals 104 zu dem Abstand der äußeren Umlenkpunkte des Kabelkanals 104 (welche das Kanalinnere 104i freilegen) korrespondieren, z.B. auf die Ebene, die quer zu der Ausgleichsrichtung 101 ist, projiziert.

Der Pfad 1202 (auch als Kabelpfad 1202 bezeichnet) des oder jedes Führungskanals 104 kann in der Ebene liegen, die von der Amplitudenrichtung 105 und der Ausgleichsrichtung 101 aufgespannt wird. Der Kabelpfad 1202 kann in dem Kanalinneren 104i bzw. zwischen den zwei Seitenwänden 104s angeordnet sein (z.B. mittig zwischen diesen). Die Länge des Kabelpfads 1202 kann die Länge der Strecke sein, entlang welcher der Kabelpfad 1202 verläuft (d.h. dessen Weglänge).

Die Sinuosität kann als Maß für die Mäanderform dienen, und ist ein Maß für die maximale erreichbare Dehnung ε. Die Sinuosität s ist definiert als Quotient zwischen der Länge 1 des Kabelpfads 1202 und dem geradlinigen Abstand a des Kanaleingangs 1202e von dem Kanalausgang 1202a, d.h. s=1/a.

Beispielsweise kann die Sinuosität des oder jedes Führungskanals 104 größer sein als ungefähr 10% (z.B. als ungefähr 20%, z.B. als ungefähr 30%), z.B. in einem Bereich sein von ungefähr 10% bis ungefähr 50%. Beispielsweise kann Länge 1041 des oder jedes Führungskanals 104 kleiner sein als ungefähr 50 cm, z.B. in einem Bereich sein von ungefähr 5 cm bis ungefähr 25 cm. Beispielsweise kann die Überallesbreite 104t des oder jedes Führungskanals 104 kleiner sein als ungefähr 15 cm (Zentimeter), und/oder z.B. in einem Bereich sein von ungefähr 2 cm (z.B. als ungefähr 5 cm)bis ungefähr 50 cm.

Beim Dehnen des Führungskanals 104 kann dessen Länge 1041 stärker (z.B. relativ oder absolut) zunehmen als die Länge des Kabelpfads 1202. Beim Dehnen des Führungskanals 104 kann dessen Überallesbreite 104t stärker (z.B. relativ oder absolut) abnehmen als die Länge des Kabelpfads 1202. Dies erreicht, dass eine Längenänderung des Kabelpfads 1202 kleiner ist als die Verformung des Führungskanals 104.

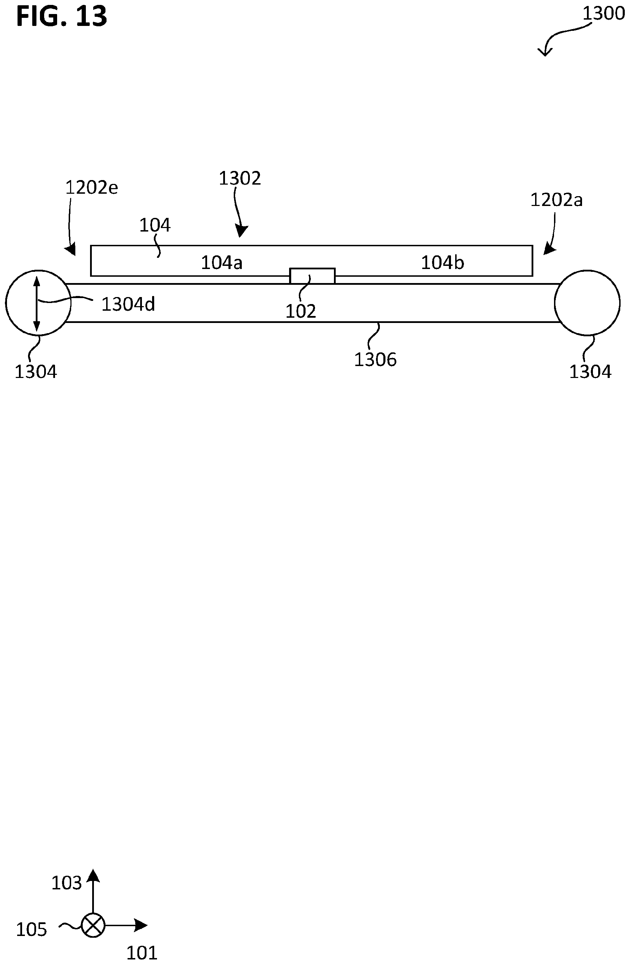

**Fig.13** veranschaulicht eine Vorrichtung 1300 gemäß verschiedenen Ausführungsformen in einer schematischen Seitenansicht oder Querschnittsansicht (z.B. mit Blickrichtung aus der Amplitudenrichtung 105), wobei die Vorrichtung 1300 eine Kabelführung 1302 aufweist, die eingerichtet ist, wie eine der Kabelführungen 100 bis 500.

Die Vorrichtung 1300 kann zwei Scharniere 1304 aufweisen und eine Trägerstruktur 1306, welche die zwei Scharniere 1304 miteinander kuppelt. Als Scharnier (auch als Band bezeichnet) kann ein Drehgelenk verstanden werden, welches genau einen Rotationsfreiheitsgrad bereitstellt (d.h. keine weiteren Rotationsfreiheitsgrade oder Translationsfreiheitsgrade). Mit anderen Worten kann ein Scharnier ein um eine Achse drehbares Gelenk (Freiheitsgrad f=1) sein.

Das oder jedes Drehgelenk kann einen sogenannten Drehpunkt bereitstellen, um den sich die Trägerstruktur 1306 unter Einwirkung einer Kraft drehen kann. Das oder jedes Drehgelenk kann eine Drehachse aufweisen, um den sich die Trägerstruktur 1306 unter Einwirkung einer Kraft drehen kann, wobei die Drehachse quer zu der Ausgleichsrichtung 101 und/oder entlang der Amplitudenrichtung 105 ist. Das im Folgenden bezüglich des Scharniers 1304 beschriebene kann in Analogie auch für ein Drehgelenk anderen Typs gelten, z.B. ein Drehgelenk, das mehr als einen Rotationsfreiheitsgrad bereitstellt.

Die Kabelführung 1302 kann zwischen den zwei Scharnieren 1304 angeordnet und mit ihrer Befestigungsstruktur 102 an der Trägerstruktur 1306 befestigt sein.

Die Vorrichtung 1300 kann beispielsweise ein Gestell aufweisen, welches die Trägerstruktur 1306 und die Scharniere 1304 aufweist. Das Gestell kann beispielsweise eine Haltevorrichtung, z.B. ein Standfuß, sein.

Die Kabelführung 1302 kann derart ausgerichtet sein, dass die zwei Kanalsegmente sich von der Befestigungsstruktur 102 weg (jeweils beidseitig) zu den zwei Scharnieren 1304 hin erstrecken, z.B. entlang der Ausgleichsrichtung 101.

In der Kabelführung 1302 kann ein oder mehr als ein Kabel aufgenommen sein, z.B. k Kabel (wobei beispielsweise k = 1, 2, 3, 4, 5, ..., 11 oder mehr ist). Die Anzahl der Kabel k kann beispielsweise größer sein als die Anzahl n der Führungskanäle 104.

Das oder jedes Scharnier 1304 kann beispielsweise eine Ausdehnung 1304d (quer zu dessen Drehachse) aufweisen, welche kleiner ist als die Sinuosität des oder jedes Führungskanals 104, z.B. kleiner als die halbe Sinuosität des oder jedes Führungskanals 104. Dies erreicht ein ausreichendes Dehnungsvermögen. Alternativ oder zusätzlich kann die Ausdehnung 1304d größer sein als die Höhe des oder jedes Führungskanals (z.B. dessen Kanalinneren). Dies minimiert den benötigten Bauraum.

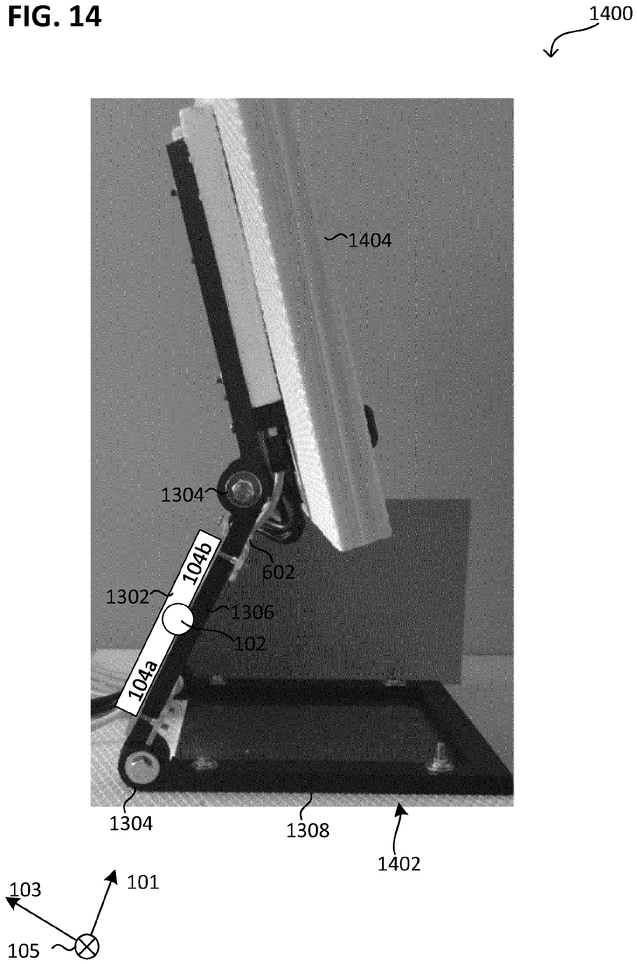

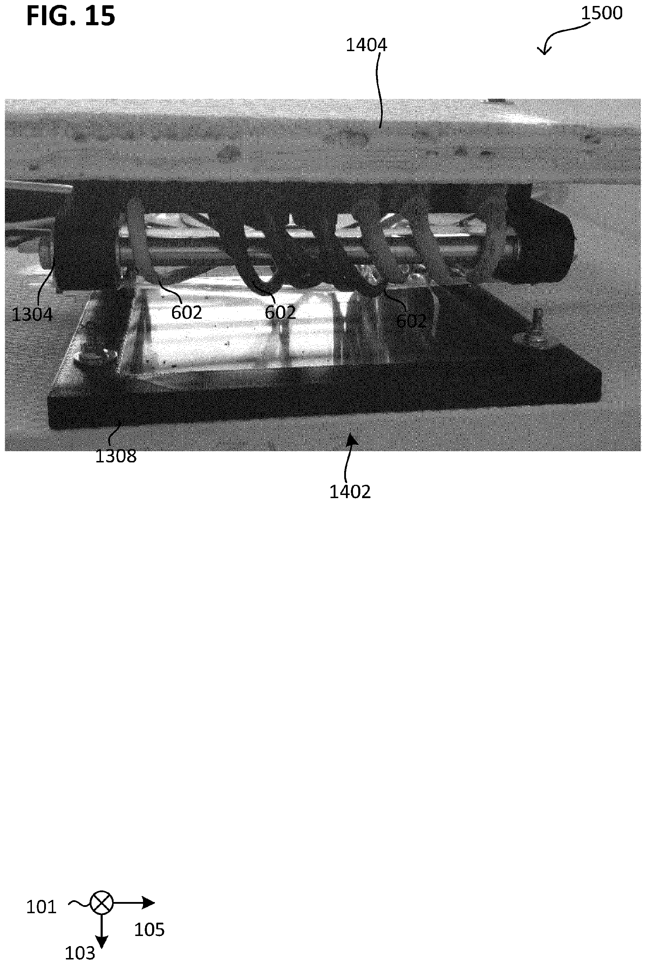

**Fig.14** veranschaulicht eine Vorrichtung 1400 gemäß verschiedenen Ausführungsformen in einer schematischen Seitenansicht (z.B. mit Blickrichtung aus der Amplitudenrichtung 105), welche eingerichtet sein kann wie die Vorrichtung 1300, und **Fig.15** die Vorrichtung 1400 in einer schematischen Seitenansicht 1500 (z.B. mit Blickrichtung aus der Ausgleichsrichtung 101).

Die Vorrichtung 1400 kann eine Benutzerschnittstelle 1404 aufweisen, welche mittels des Gestells 1402 gehalten ist. Die Benutzerschnittstelle 1404 kann beispielsweise mit einem ersten Scharnier der zwei Scharniere 1304 gekuppelt sein, so dass diese relativ zu der Trägerstruktur 1306 drehbar gelagert ist. Das Gestell 1402 kann ferner eine Standbasis 1408 aufweisen. Die Standbasis 1408 kann mit einem zweiten Scharnier der zwei Scharniere 1304 gekuppelt sein, so dass diese relativ zu der Trägerstruktur 1306 drehbar gelagert ist. Dies erreicht, dass die Benutzerschnittstelle relativ zu der Standbasis 1408 verschoben und/oder gedreht werden kann.

Das oder jedes in der Kabelführung 1302 aufgenommene Kabel 602 kann mit der Benutzerschnittstelle 1404 gekoppelt sein, z.B. zum Austauschen eines elektrischen Signals mit der Benutzerschnittstelle 1404.

Die Benutzerschnittstelle 1404 kann beispielsweise eine Anzeigevorrichtung (z.B. einen Touchscreen) und/oder eine Tastatur sowie optional einen Drucker und/oder eine Festplatte aufweisen. Beispielsweise kann die Benutzerschnittstelle 1404 einen Monitor aufweisen, z.B. ein PC-Monitor.

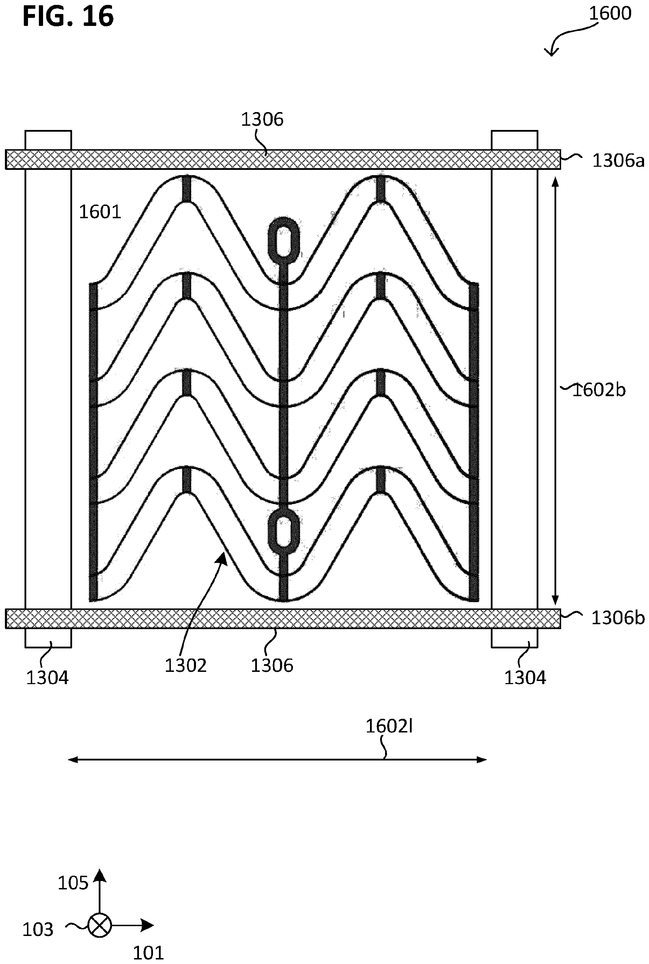

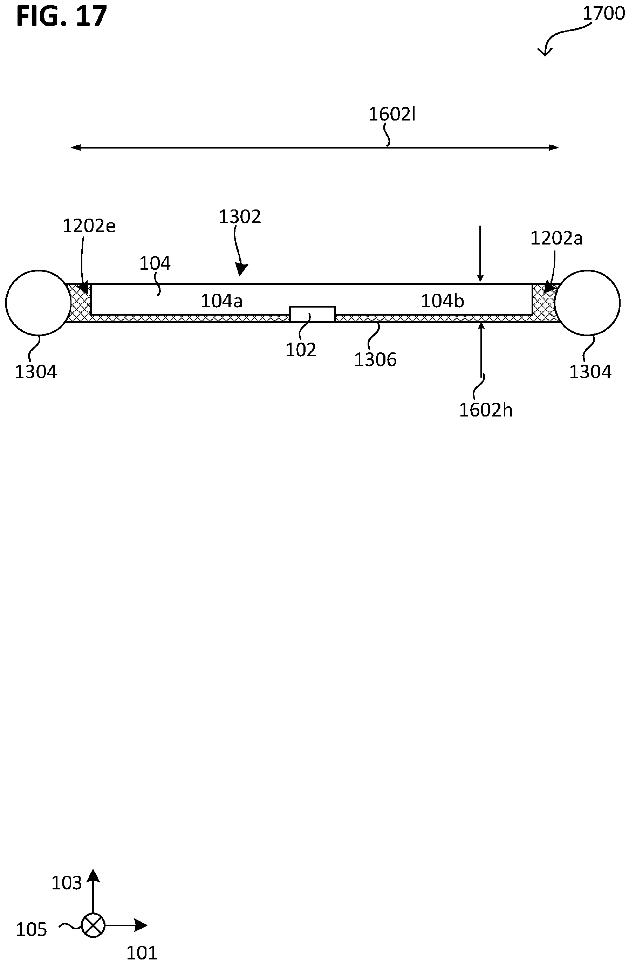

**Fig.16** veranschaulicht eine Vorrichtung 1600 gemäß verschiedenen Ausführungsformen in einer schematischen Draufsicht (z.B. mit Blickrichtung auf eine Oberseite der Kabelführung 1600), die eingerichtet sein kann, wie die Vorrichtung 1300 oder 1400, mit dem Unterschied, dass die Kabelführung 1302 innerhalb der Trägerstruktur 1306 angeordnet ist. **Fig.17** veranschaulicht die Vorrichtung 1600 in einer schematischen Querschnittsansicht 1700 (z.B. mit Blickrichtung aus der Amplitudenrichtung 105).

Die Trägerstruktur 1306 kann einen Hohlraum 1601 (auch als Trägerinnenraum 1601 bezeichnet) aufweisen, welcher beispielsweise zwischen zwei Abschnitten 1306a, 1306b der Trägerstruktur 1306 (auch als Träger bezeichnet) angeordnet ist. Jeder der Träger 1306a, 1306b kann beispielsweise einen Steg aufweisen oder daraus gebildet sein, z.B. eine Stange. Die Träger 1306a, 1306b können den Trägerinnenraum 1601 auf einander gegenüberliegenden Seiten (z.B. bezüglich der Amplitudenrichtung 105) begrenzen.

Der Trägerinnenraum 1601 kann ferner zwischen den zwei Scharnieren 1304 angeordnet sein, z.B. auf einander gegenüberliegenden Seiten (z.B. bezüglich der Ausgleichsrichtung 101) von diesen begrenzt.

Die Kabelführung 1302 kann in dem Trägerinnenraum 1601 angeordnet sein. Dies ist eine besonders platzsparende Konfiguration.

Beispielsweise kann die Höhe 204h des oder jedes Führungskanals (z.B. des oder jedes Kanalinneren 104i) mehr als ungefähr 50% der Höhe 1602h der Trägerstruktur 1306 (z.B. deren Trägerinnenraums 1601) sein, z.B. mehr als ungefähr 60%, z.B. mehr als ungefähr 70%, z.B. mehr als ungefähr 80%, z.B. mehr als ungefähr 90%. Beispielsweise kann die Länge 1041 des oder jedes Führungskanals mehr als ungefähr 50% der Länge 16021 des Trägerinnenraums 1601 sein, z.B. mehr als ungefähr 60%, z.B. mehr als ungefähr 70%, z.B. mehr als ungefähr 80%, z.B. mehr als ungefähr 90%. Die Länge 16021 des Trägerinnenraums 1601 kann beispielsweise gleich sein zu dem Abstand der zwei Scharniere 1304 voneinander. Beispielsweise kann eine Breite der Kabelführung 1302 (Ausdehnung entlang der Amplitudenrichtung 104) mehr als ungefähr 50% der Breite 1602b des Trägerinnenraums 1601 (Ausdehnung entlang der Amplitudenrichtung 104) sein, z.B. mehr als ungefähr 60%, z.B. mehr als ungefähr 70%, z.B. mehr als ungefähr 80%, z.B. mehr als ungefähr 90%. Die Breite 1602b des Trägerinnenraums 1601 kann beispielsweise gleich sein zu dem Abstand der zwei Träger 1306a, 1306b voneinander.

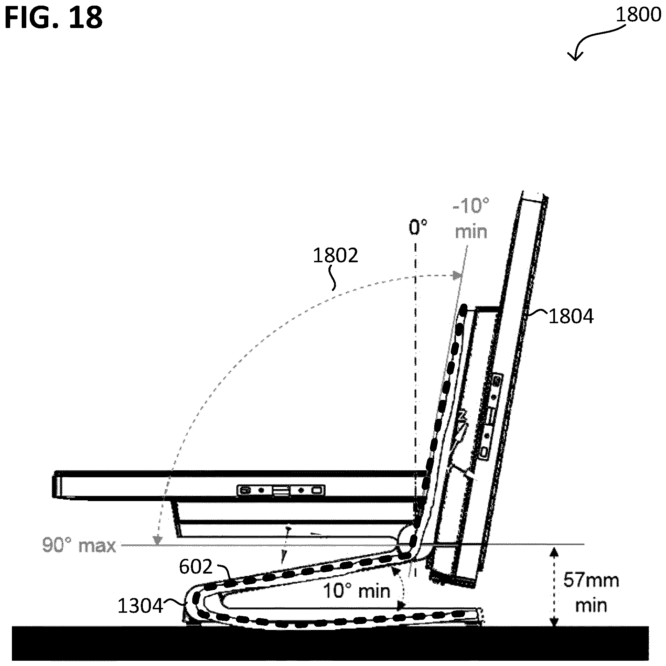

**Fig.18** veranschaulicht eine Vorrichtung 1800 gemäß verschiedenen Ausführungsformen in einer schematischen Draufsicht (z.B. mit Blickrichtung entlang der Amplitudenrichtung), die eingerichtet sein kann, wie eine der Vorrichtungen 1300, 1400 oder 1600, wobei der Drehwinkel 1802 der Scharniere 1304 dargestellt ist. Der Drehwinkel 1802 kann beispielsweise in einem Bereich sein von ungefähr 10° bis ungefähr 130°, z.B. mehr als 90°. Die Benutzerschnittstelle kann Teil eines All-in-one-Computers 1804 sein, der beispielsweise mit einem der Scharniere 1304 gekuppelt ist. Ferner ist die Verlegung der Kabel 602 dargestellt.

## Patentansprüche

1. Kabelführung (100 bis 500, 1302), aufweisend:
• eine Befestigungsstruktur (102),
• mehrere nebeneinander angeordnete Führungskanäle (104), welche mittels der Befestigungsstruktur (102) miteinander gekuppelt sind und von denen jeder Führungskanal zwei oder mehrere mäanderbogenförmige Kanalsegmente (104a, 104b) aufweist, wobei zwischen zwei mäanderbogenförmigen Kanalsegmenten (104a, 104b) der zwei oder mehreren mäanderbogenförmigen Kanalsegmente (104a, 104b) die Befestigungsstruktur (102) angeordnet ist,
• wobei die zwei mäanderbogenförmigen Kanalsegmente (104a, 104b) derart federelastisch eingerichtet sind, dass diese entgegen einer Federkraft zu der Befestigungsstruktur (102) hin gestaucht und von der Befestigungsstruktur (102) weg gedehnt werden können.

2. Kabelführung (100 bis 500, 1302) gemäß Anspruch 1, wobei jedes der zwei mäanderbogenförmigen Kanalsegmente (104a, 104b) ein Polymer aufweist.

3. Kabelführung (100 bis 500, 1302) gemäß Anspruch 1 oder 2, wobei jedes der zwei mäanderbogenförmigen Kanalsegmente (104a, 104b) eine U-Form aufweist.

4. Kabelführung (100 bis 500, 1302) gemäß einem der Ansprüche 1 bis 3, wobei der mäanderbogenförmige Verlauf der zwei Kanalsegmente (104a, 104b) jedes Führungskanals der mehreren Führungskanäle (104) einander fortsetzt.

5. Kabelführung (100 bis 500, 1302) gemäß einem der Ansprüche 1 bis 4, wobei jedes der zwei mäanderbogenförmigen Kanalsegmente (104a, 104b) zwei Seitenwände (104s) und einen Steg (502s) aufweist, wobei die zwei Seitenwände (104s) mittels des Stegs (502s) miteinander verbunden sind.

6. Kabelführung (100 bis 500, 1302) gemäß einem der Ansprüche 1 bis 5, wobei zwei einander unmittelbar benachbarte Führungskanäle (104) der mehreren Führungskanäle (104) einander überlappen.

7. Kabelführung (100 bis 500, 1302) gemäß einem der Ansprüche 1 bis 6, wobei die mehreren nebeneinander angeordneten Führungskanäle (104) mehr als zwei Führungskanäle (104) aufweisen.

8. Kabelführung (100 bis 500, 1302) gemäß einem der Ansprüche 1 bis 7, wobei jeder der zwei mäanderbogenförmigen Kanalsegmente (104a, 104b) einen Endabschnitt aufweist, der der Befestigungsstruktur (102) gegenüberliegt, wobei ein erster Abstand der Endabschnitte in einem gedehnten Zustand der zwei mäanderbogenförmigen Kanalsegmente (104a, 104b) mehr als das 1,5-fache eines zweiten Abstands der Endabschnitte in einem gestauchten Zustand der zwei mäanderbogenförmigen Kanalsegmente (104a, 104b) ist.

9. Kabelführung (100 bis 500, 1302) gemäß einem der Ansprüche 1 bis 8, wobei die Befestigungsstruktur (102) mehrere Durchgangsöffnungen (102o) aufweist, an welchen diese befestigt werden kann.

10. Kabelführung (100 bis 500, 1302) gemäß einem der Ansprüche 1 bis 9, wobei eine Sinuosität jedes der zwei Kanalsegmente größer ist als 20%.

11. Vorrichtung (1300, 1400, 1600), aufweisend:
• zwei Drehgelenke (1304) und eine Trägerstruktur (1306), welche die zwei Drehgelenke (1304) miteinander kuppelt,
• eine Kabelführung (100 bis 500, 1302) gemäß einem der Ansprüche 1 bis 10, welche zwischen den zwei Drehgelenken (1304) angeordnet und mit ihrer Befestigungsstruktur (102) an der Trägerstruktur (1306) befestigt ist;
• wobei die Kabelführung (100 bis 500, 1302) derart ausgerichtet ist, dass sich jedes der zwei Kanalsegmente (104a, 104b) von der Befestigungsstruktur (102) weg zu einem der zwei Drehgelenke (1304) hin erstreckt.

12. Verfahren, aufweisend:
• Befestigen einer Kabelführung (100 bis 500, 1302) gemäß einem der Ansprüche 1 bis 10 an einer Trägerstruktur (1306), die zwei Drehgelenke (1304) miteinander kuppelt;
• Einlegen mehrerer Kabel (602) in die Führungskanäle (104) der Kabelführung (100 bis 500, 1302), wobei die mehreren Kabel (602) um jedes der zwei Drehgelenke (1304) herum verlegt sind.

## Claims

1. Cable guide (100 to 500, 1302) having:
• a fastening structure (102),
• a plurality of guide ducts (104) which are arranged next to one another and coupled together by means of the fastening structure (102) and of which each guide duct has two or more serpentine arc-shaped duct segments (104a, 104b), wherein the fastening structure (102) is arranged between two serpentine arc-shaped duct segments (104a, 104b) of the two or more serpentine arc-shaped duct segments (104a, 104b),
• wherein the two serpentine arc-shaped duct segments (104a, 104b) are designed to be resilient such that they can be compressed, counter to a spring force, towards the fastening structure (102) and stretched away from the fastening structure (102).

2. Cable guide (100 to 500, 1302) according to Claim 1, wherein each of the two serpentine arc-shaped duct segments (104a, 104b) comprises a polymer.

3. Cable guide (100 to 500, 1302) according to Claim 1 or 2, wherein each of the two serpentine arc-shaped duct segments (104a, 104b) is U-shaped.

4. Cable guide (100 to 500, 1302) according to one of Claims 1 to 3, wherein the serpentine arc-shaped courses of the two duct segments (104a, 104b) of each guide duct of the plurality of guide ducts (104) continue one another.

5. Cable guide (100 to 500, 1302) according to one of Claims 1 to 4, wherein each of the two serpentine arc-shaped duct segments (104a, 104b) has two side walls (104s) and a crosspiece (502s), wherein the two side walls (104s) are connected together by means of the crosspiece (502s).

6. Cable guide (100 to 500, 1302) according to one of Claims 1 to 5, wherein two directly adjacent guide ducts (104) of the plurality of guide ducts (104) overlap one another.

7. Cable guide (100 to 500, 1302) according to one of Claims 1 to 6, wherein the plurality of guide ducts (104) arranged next to one another have more than two guide ducts (104).

8. Cable guide (100 to 500, 1302) according to one of Claims 1 to 7, wherein each of the two serpentine arc-shaped duct segments (104a, 104b) has an end portion located opposite the fastening structure (102), wherein a first spacing of the end portions in a stretched state of the two serpentine arc-shaped duct segments (104a, 104b) is more than 1.5 times a second spacing of the end portions in a compressed state of the two serpentine arc-shaped duct segments (104a, 104b).

9. Cable guide (100 to 500, 1302) according to one of Claims 1 to 8, wherein the fastening structure (102) has a plurality of through-openings (102o) at which it can be fastened.

10. Cable guide (100 to 500, 1302) according to one of Claims 1 to 9, wherein a sinuosity of each of the two duct segments is greater than 20%.

11. Device (1300, 1400, 1600) having:
• two pivot joints (1304) and a carrier structure (1306) that couples the two pivot joints (1304) together,
• a cable guide (100 to 500, 1302) according to one of Claims 1 to 10, which is arranged between the two pivot joints (1304) and is fastened to the carrier structure (1306) by its fastening structure (102);
• wherein the cable guide (100 to 500, 1302) is oriented such that each of the two duct segments (104a, 104b) extends away from the fastening structure (102) towards one of the two pivot joints (1304).

12. Method involving:
• fastening a cable guide (100 to 500, 1302) according to one of Claims 1 to 10 to a carrier structure (1306) that couples two pivot joints (1304) together;
• introducing a plurality of cables (602) into the guide ducts (104) of the cable guide (100 to 500, 1302), wherein the plurality of cables (602) have been laid about each of the two pivot joints (1304).

## Revendications

1. Guide-câbles (100 à 500, 1302) comprenant :
• une structure de fixation (102),
• une pluralité de canaux de guidage (104) qui sont disposés les uns à côté des autres et qui sont accouplés les uns aux autres au moyen de la structure de fixation (102), chacun des canaux de guidage comportant au moins deux segments de canal méandriques (104a, 104b), la structure de fixation (102) étant disposée entre deux segments de canal méandriques (104a, 104b) de deux segments de canal méandriques (104a, 104b) ou plus,
• les deux segments de canal méandriques (104a, 104b) étant conçus pour être élastiques de manière à pouvoir être comprimés vers la structure de fixation (102) en s'opposant à une force élastique et à être étirés depuis la structure de fixation (102).

2. Guide-câbles (100 à 500, 1302) selon la revendication 1, chacun des deux segments de canal méandriques (104a, 104b) comportant un polymère.

3. Guide-câbles (100 à 500, 1302) selon la revendication 1 ou 2, chacun des deux segments de canal méandriques (104a, 104b) ayant une forme en U.

4. Guide-câbles (100 à 500, 1302) selon l'une des revendications 1 à 3, les allures méandriques des deux segments de canal (104a, 104b) de chaque canal de guidage de la pluralité de canaux de guidage (104) faisant suite l'un l'autre.

5. Guide-câbles (100 à 500, 1302) selon l'une des revendications 1 à 4, chacun des deux segments de canal méandriques (104a, 104b) comportant deux parois latérales (104s) et une nervure (502s), les deux parois latérales (104s) étant reliées l'une à l'autre au moyen de la nervure (502s).

6. Guide-câbles (100 à 500, 1302) selon l'une des revendications 1 à 5, deux canaux de guidage (104) immédiatement adjacents de la pluralité de canaux de guidage (104) se chevauchant.

7. Guide-câbles (100 à 500, 1302) selon l'une des revendications 1 à 6, la pluralité de canaux de guidage (104) disposés les uns à côté des autres comportant plus de deux canaux de guidage (104).

8. Guide-câbles (100 à 500, 1302) selon l'une des revendications 1 à 7, chacun des deux segments de canal méandriques (104a, 104b) comportant une portion d'extrémité qui est opposée à la structure de fixation (102), un premier espacement des portions d'extrémité dans un état étiré des deux segments de canal méandriques (104a, 104b) étant supérieur à 1,5 fois un deuxième espacement des portions d'extrémité dans un état comprimé des deux segments de canal méandriques (104a, 104b).

9. Guide-câbles (100 à 500, 1302) selon l'une des revendications 1 à 8, la structure de fixation (102) comportant une pluralité d'ouvertures traversantes (102o) auxquelles elle peut être fixée.

10. Guide-câble (100 à 500, 1302) selon l'une des revendications 1 à 9, une sinuosité de chacun des deux segments de canal étant supérieure à 20 %.

11. Dispositif (1300, 1400, 1600) comprenant :
• deux articulations rotatives (1304) et une structure de support (1306) qui accouple les deux articulations rotatives (1304) l'une à l'autre,
• un guide-câbles (100 à 500, 1302) selon l'une des revendications 1 à 10, disposé entre les deux articulations rotatives (1304) et fixé par sa structure de fixation (102) à la structure de support (1306) ;
• le guide-câbles (100 à 500, 1302) étant orienté de manière à ce que chacun des deux segments de canal (104a, 104b) s'étende vers l'une des deux articulations rotatives (1304) à l'opposé de la structure de fixation (102) .

12. Procédé comportant les étapes suivantes :
• fixer un guide-câbles (100 à 500, 1302) selon l'une des revendications 1 à 10 à une structure de support (1306) qui accouple deux articulations rotatives (1304) l'une à l'autre ;
• insérer une pluralité câbles (602) dans les canaux de guidage (104) du guide-câbles (100 à 500, 1302), la pluralité de câbles (602) étant placée autour de chacune des deux articulations rotatives (1304).
